(19) Europäisches Patentamt / European Patent Office / Office européen des brevets

(11) **EP 2 790 440 B1**

(12) **EUROPEAN PATENT SPECIFICATION**

(45) Date of publication and mention
of the grant of the patent:
**06.04.2016 Bulletin 2016/14**

(51) Int Cl.:
***H04W 36/00*** *(2009.01)*

(21) Application number: **13163642.5**

(22) Date of filing: **12.04.2013**

(54) **Self optimization of layer 3 filtering in wireless networks**

Selbstoptimierung von Schicht-3-Filterung in drahtlosen Netzwerken

Auto-optimisation de filtrage de couche 3 dans des réseaux sans fil

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.10.2014 Bulletin 2014/42**

(73) Proprietor: **ALCATEL LUCENT**
**92100 Boulogne-Billancourt (FR)**

(72) Inventors:
• **Feki, Afef**
**91620 Nozay (FR)**
• **Capdevielle, Véronique**
**91620 Nozay (FR)**

(74) Representative: **Berthier, Karine**
**Alcatel-Lucent**
**Intellectual Property Business Group**
**148/152, route de la Reine**
**92100 Boulogne-Billancourt (FR)**

(56) References cited:
**EP-A1- 2 413 625      US-A1- 2012 115 463
US-A1- 2012 214 540**

• **BIPLAB SIKDAR ET AL: "Wavelet Based
Detection of Shadow Fading in Wireless
Networks", GLOBAL TELECOMMUNICATIONS
CONFERENCE, 2007. GLOBECOM '07. IEEE,
IEEE, PISCATAWAY, NJ, USA, 1 November 2007
(2007-11-01), pages 305-309, XP031195992, ISBN:
978-1-4244-1042-2**

**Description**

FIELD OF THE INVENTION

The present invention relates generally to mobility management within wireless communications networks, and more particularly to handover parameters optimization.

BACKGROUND OF THE INVENTION

With the continuous deployment of wireless communications networks, one of the most persistent challenges for telecom operators is ensuring seamless mobility (handover) between radio access technologies. Such feature is essential for service continuity and ongoing sessions maintain while moving from a serving base station to a target base station.

In this regard, different handover procedures are specified for each radio access technology. In particular, in Long Term Evolution (LTE) networks, the handover procedure is based on measurement reports sent by the User Equipment (UE) to serving base station (eNB). Subsequently, if predefined conditions are met, the handover procedure is triggered at the UE based on triggering algorithms and parameters defined by the network.

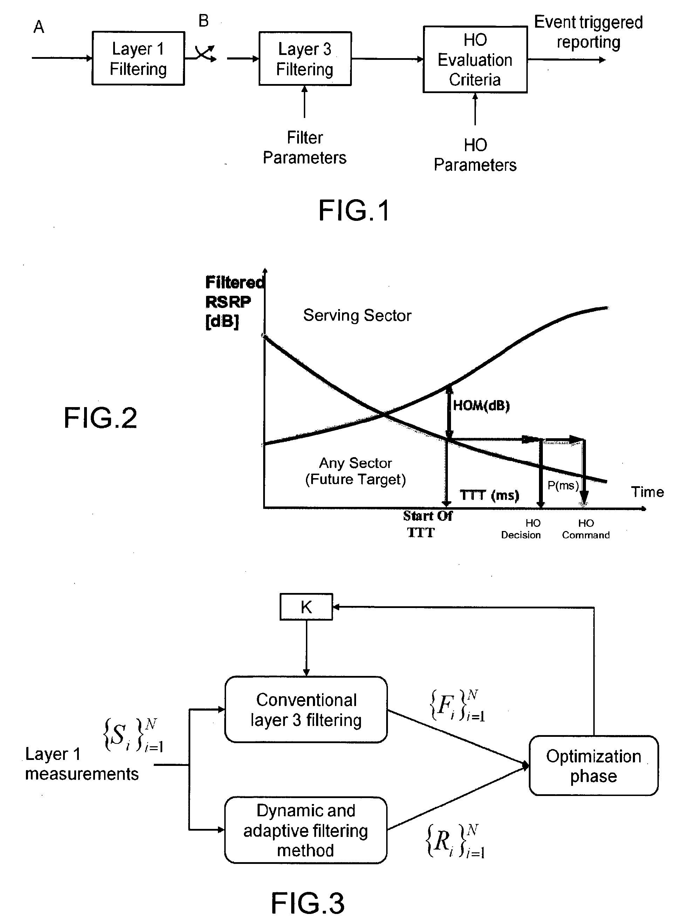

In fact, with reference to figure 1 (D. Aziz et al., "Improvement of LTE handover performance through interference coordination", IEEE 2009), the UE periodically performs (at point "A" of figure 1) downlink radio channel measurement based on the Reference Signal Received Power (RSRP, or more generally handover measurements) by coherently adding reference symbols (pilot signals) power within the sub-frame over the complete measurement bandwidth.

The measured samples by the UE are averaged incoherently by Layer 1 (L1) filter and are sampled (at point "B" of figure 1) after each measurement period. The sampled output of L1 filter is then processed by Layer 3 filter.

The complete system bandwidth is taken as measurement bandwidth in order to neglect the measurement errors and to meet the standard measurement accuracy requirements. The Layer 3 (L3) filter function is taken from the document 3GPP TS 36.331 V8.2.0 (2008-06), "EUTRA Radio Resource Control" and can be written as (M. Anas et al., "Performance analysis of handover measurements and layer 3 filtering for UTRAN LTE", IEEE PIMRC'07):

$$r_n = \left\{ 1 - (1/2)^{k/4} \right\} r_{n-1} + (1/2)^{k/4} \times q_n \qquad (1)$$

Where:

- $r_n$ is the updated filtered measurement at time n
- $r_{n-1}$ is the updated filtered measurement at time n-1
- $q_n$ is the latest received handover measurement resulting from L1 filtering
- K is L3 filter coefficient.

The L3 filtered handover measurements $r_n$ are used in handover triggering algorithm and the handover procedure is launched as soon as a specified condition is satisfied thereby. Generally, the condition is as follows:

$$r_{ni} \geq r_{ns} + h \qquad (2)$$

Where,

- $r_{ni}$ is the nth sample of filtered RSRP of any detected sector i other than the serving sector;
- $r_{ns}$ is the nth sample of filtered RSRP of the serving sector; and
- $h$ is the given handover hysteresis margin: HOM.

Handover is triggered if condition on $r_{ni}$ expressed in the above equation (2) is met for a given minimum duration said Time To Trigger (TTT) duration.

Graphically depicted in figure 2, the above condition is met (i.e. the handover is triggered) when the RSRP value from the future target cell is higher than the one from serving cell by a number of dBs (a handover hysteresis margin HOM) equal to HOM for a period equal to TTT.

Accordingly, Handover margin (HOM) and time-to-trigger (TTT) (designated "HO parameters" in figure 1) need to be accurately defined by the network operator so as to reduce handover failure rate.

Nevertheless, the layer 3 filter coefficient ("filter parameter" in figure 1) demands attention as well, and needs to be defined beforehand. As handover evaluation criteria are to be applied to L3 filtered handover measurements with a certain value of K, this filter coefficient influences anyway the handover triggering decision.

In fact, in addition to controlling the effect of fast fading on the reported handover measurements as well as the handover measurements errors at the layer 1 level, the layer 3 filter coefficient allows to tune the filtering action on layer 1 measurements. Therefore, the L3 filter coefficient impacts the handover success rate, in addition to the choice of HOM and TTT.

It results in that the handover triggering decision is quite linked to layer 3 filtering coefficient. Therefore, the appropriate setting of Layer 3 filtering coefficient is of significant importance to the handover procedure.

A further problem arises with regards to the complexity of manual configuration with such coefficient of Layer 3 filter of user equipments. EP 2413 625 A1 also discloses filtering according to the prior art.

One object of the present invention is to provide an automatic and dynamic set up of an optimal layer 3 filtering coefficient K.

Another object of the present invention is to provide an optimization method of handover parameters, notably the L3 filtering coefficient K, the time to trigger TTT, and the handover hysteresis margin HOM, independently from the identity of the pairs of cells (currently serving cell and target certain cell) and from the history of past experience.

Another object of the present invention is to propose an adaptive and dynamic estimation of L3 filtering coefficient K, TTT and HOM that fit as closely as possible to the current handover scenario (low/high mobility of users, network load, radio network deployment for exemple).

Another object of the present invention is to propose a self-optimization method for optimal handover parameters estimation.

Another object of the present invention is to propose autonomous mechanisms for automatically adapting handover related parameters.

SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to a method for optimizing layer 3 filtering of handover measurements, according to claim 1.

In accordance with a broad aspect, the layer 3 filtering and the adaptive filtering of a predefined set of handover measurements are performed simultaneously.

In accordance with another broad aspect, the adaptive filtering is based on wavelet transform.

In accordance with another broad aspect, an approximation component at level 3 is utilized for wavelet transform.

In accordance with another broad aspect, the above methods further comprise an update step of the time-to-trigger (TTT) and the handover hysteresis margin (HOM), using the obtained second layer 3 filter coefficient.

Various embodiments further relate to a user equipment configured for optimizing layer 3 filtering of handover measurements according to claim 7.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

DESCRIPTION OF THE DRAWING

The objects, advantages and other features of various embodiments will become more apparent from the following disclosure and claims. The following non-restrictive description of preferred embodiments is given for the purpose of exemplification only with reference to the accompanying drawing in which

- FIG. 1 is a schematic diagram illustrating handover measurement filtering and reporting;

- FIG.2 depicts the model used by 3GPP for handover procedure in Long Term Evolution (LTE) networks (D. Aziz et al., "Improvement of LTE handover performance through interference coordination", IEEE 2009);
- FIG.3 is a schematic diagram illustrating an embodiment for estimating optimal handover parameters.

DETAILED DESCRIPTION OF ILLUSTRATIVE EMBODIMENTS

With reference to figure 3, there is shown an optimization scheme for dynamic and adaptive estimation of the parameter K which controls L3 filtering. In this regard, the following notations are utilized:

- A is a sliding window of successive measurements of size N;
- $\{S_i\}_{i=1}^{N}$ is the output of layer 1 filtering measurements;
- $\{F_i\}_{i=1}^{N}$ is the output of layer 3 filtering measurements,
- $\{R_i\}_{i=1}^{N}$ is the output of the block designated "Dynamic and Adaptive Filtering method" in figure 3.

During a time window A of duration N consecutive measurement samples $\{S_i\}_{i=1}^{N}$ outputted by layer 1, the filtered measurements $\{F_i\}_{i=1}^{N}$, output of the conventional layer 3 filtering (i.e. 3GPP-defined) of $\{S_i\}_{i=1}^{N}$ using a given filtering coefficient K, are memorized. In other words, the N last outputs of layer 3 filtering using a given coefficient K are collected and put into memory.

In parallel (simultaneously) (i.e. during the same sliding time window A of a predefined size: N samples), a dynamic filtering method is applied on the same layer 1 measurements $\{S_i\}_{i=1}^{N}$ (i.e. on those used by conventional layer 3 filtering for producing $\{F_i\}_{i=1}^{N}$), to obtain the vector $\{R_i\}_{i=1}^{N}$. This filtering aims at removing fast fading effects and measurement errors from the input measurements $\{S_i\}_{i=1}^{N}$. $\{R_i\}_{i=1}^{N}$ may be obtained through any adaptive filtering method which may, for example, be based on wavelet transform. In fact, according to X. Long and B. Sikdar ("Wavelet Based detection of shadow fading in wireless networks", Global Telecommunications Conference, 2007, GLOBECOM '07, IEEE), a wavelet decomposition of the signal strength time series into independent fading components may be applied for $\{S_i\}_{i=1}^{N}$ filtering.

Thus, the dynamic and adaptive filtering may be performed through a multi-resolution decomposition with wavelet transform to extract filtered measurements $\{R_i\}_{i=1}^{N}$ from $\{S_i\}_{i=1}^{N}$.

The wavelet transform provide time-frequency representation of a given input signal *X* at different scales. The initial signal *X* is decomposed in an approximation component at a given scale J adding to the details components at the lower scales $1 \leq j \leq J$. Then, the wavelet decomposition of an initial signal vector *X* can be expressed as following:

$$X = approx_J + \sum_{j=1}^{J} details_j$$

$$X = \sum_{k} a_x(J,k)\phi_{J,K} + \sum_{j=1}^{J}\sum_{k} d_x(j,k)\varphi_{j,k}$$

Here: $a_x$ and $d_x$ are, respectively, the wavelet transform approximation and detail coefficients. $\phi_{J,K}$ is the wavelet function from the mother wavelet function $\phi$ and $\varphi_{j,k}$ is the scale function.

In one embodiment, the time resolution of the layer 1 measurements $\{S_i\}_{i=1}^{N}$ is of the order of the wavelength which corresponds to the multipath fading.

The higher resolution steps corresponds to the shadowing fading (J=5) and to the pathloss (J>6). Alternatively, the output $\{R_i\}_{i=1}^{N}$ of the dynamic and adaptive filtering method may be limited to the approximation component at level 3.

Accordingly, it results in that two sets of vectors are obtained, namely

- $\{F_i\}_{i=1}^{N}$ corresponding to the conventional layer 3 measurements obtained with a given filtering coefficient K, and

- $\{R_i\}_{i=1}^{N}$ corresponding to the result of a dynamic and adaptive filtering, for example, based on wavelet transform.

Then, both $\{F_i\}_{i=1}^{N}$ and $\{R_i\}_{i=1}^{N}$ are used as input to the optimization phase (see figure 3). The goal of this phase is to compare the performances of the layer 3 filtering defined in 3GPP standard with a given K value to the "optimal" adaptive filtering performed on whole measurement vector $\{S_i\}_{i=1}^{N}$. Thus, the optimization phase aims to estimate the optimal filtering parameter K so that it arrives as close as possible to the results obtained with the dynamic and adaptive filtering method.

In one embodiment, an optimal value of the filter coefficient K may be obtained through a searching step of the value of K that minimizes the gap between the vectors $\{F_i\}_{i=1}^{N}$ and $\{R_i\}_{i=1}^{N}$ (i.e. so that the layer 3 filtered measurements fit with the adaptively filtered measurements). This may be formulated as following:

$$\text{Search K so that } \sum_{i=1}^{N}\left(F_i - R_i\right)^2 \text{ is minimized}$$

The output of the optimization block, namely the estimated optimal L3 filtering coefficient K, is injected into the layer 3 filtering block (see figure 3) so as to operate in a closed-loop manner.

Thus, the choice of the parameter K is adaptively optimized with respect to the dynamic and adaptive method output, and then dynamically provided to the standardized layer 3 filtering.

Thanks to the new corrected value of K, outputted by the optimization phase, the 3GPP standard layer 3 is configured for recursive filtering so that the resulting performances are as close as possible to those of "optimum" adaptive filtering.

Advantageously, controlling the layer 3 filtering in a closed loop manner makes the estimated value of the parameter K more robust and optimal.

An evaluation step of the feedback control of L3 filter coefficient K, for example in terms of handover failure ratio, may be performed in order to optimize accordingly the parameters of the dynamic and adaptive filtering method (such as, the resolution level J used in the wavelet transform of the initial signal).

It is to be noted that the estimated value of the filter coefficient K may be also utilized to dynamically update the other handover parameters, namely Time-To-Trigger (TTT) and Handover Margin (HOM), so as to take into account of each new value of K.

Advantageously, the above-described method sets up in a dynamic manner a parameter implied in the handover procedure, in particular the filtering coefficient K, used in the standardized layer 3 filtering procedure. In particular, the above-described method provides optimal filter coefficient so that to fit as close as possible to the current handover context is a self organized manner.

Further, advantageously, the above-described method, operating in a closed loop manner, allows setting up automatically and dynamically the filtering coefficient K (i.e. without manual intervention), needed by UE for handover measurements proceeding (especially in dense 4G networks for which static manual configuration of handover feature is hardly tractable).

Further, advantageously, the above-described self-optimizing procedure permits to dynamically react to measurement variations and mobility scenarios by dynamically adjusting handover parameters. Hence, the above-described method reduces the effort and the human involvement in maintaining and optimizing the networks.

## Claims

1. A method for optimizing layer 3 filtering of handover measurements at a user equipment, said method comprising the following steps

- memorizing layer 3 filtered measurements of a predefined set of handover measurements, layer 3 filtering using a first layer 3 filter coefficient "K";
- performing an adaptive filtering on the said predefined set of handover measurements so that obtaining adaptively filtered measurements;

- searching and obtaining a second layer 3 filter coefficient so that the layer 3 filtered measurements, which are filtered with said second layer 3 filter coefficient, fit with the adaptively filtered measurements
- using the said second layer 3 filter coefficient for layer 3 filtering of handover measurements.

2. The method of claim 1, wherein the layer 3 filtering and the adaptive filtering of a predefined set of handover measurements are performed simultaneously.

3. The method of claim 1 or 2, wherein the adaptive filtering is based on wavelet transform.

4. The method of claim 3, wherein an approximation component at level 3 is utilized for wavelet transform.

5. The method of any of the preceding claims, wherein the second filter coefficient is searched so that the Euclidian distance between the layer 3 filtered measurement and the adaptively filtered measurements is minimal.

6. The method of any of the preceding claims, wherein it further comprises an update step of handover parameters using the second layer 3 filter coefficient, said handover parameters including the time-to-trigger (TTT) and the handover hysteresis margin (HOM).

7. A user equipment configured for optimizing layer 3 filtering of handover measurements, said user equipment comprising

- means for memorizing layer 3 filtered measurements of a predefined set of handover measurements, layer 3 filtering using a first layer 3 filter coefficient "K";
- means for performing an adaptive filtering on the said predefined set of handover measurement so that obtaining adaptively filtered measurements;
- means for searching and obtaining a second layer 3 filter coefficient so that the layer 3 filtered measurements, which are filtered with said second layer 3 filter coefficient, fit with the adaptively filtered measurements;
- means for setting up the layer 3 filter for layer 3 filtering of handover measurements with the second layer 3 filter coefficient.

8. Computer program implementable on a processing unit of a computer, said program including code sections for performing instructions corresponding to the steps of a method according to any of claims 1-6.

**Patentansprüche**

1. Verfahren für die Optimierung des Layer-3-Filterns von Handovermessungen bei einem Benutzerendgerät, wobei besagtes Verfahren die folgenden Schritte umfasst:

- Speichern Layer-3-gefilterter Messungen eines vordefinierten Satzes von Handovermessungen, wobei das Layer-3-Filtern einen ersten Layer-3-Filterkoeffizienten "K" verwendet;
- Ausführen eines adaptiven Filterns für besagten vordefinierten Satz von Handovermessungen, so dass adaptiv gefilterte Messungen gewonnen werden;
- Suchen und Abrufen eines zweiten Layer-3-Filterkoeffizienten, dergestalt, dass die Layer-3-gefilterten Messungen, die anhand des besagten zweiten Layer-3-Filterkoeffizienten gefiltert wurden, mit den adaptiv gefilterten Messungen übereinstimmen;
- Verwenden der besagten zweiten Layer-3-Filterkoeffizienten für das Layer-3-Filtern von Handovermessungen.

2. Verfahren nach Anspruch 1, wobei das Layer-3-Filtern und das adaptive Filtern eines vordefinierten Satzes von Handovermessungen simultan ausgeführt werden.

3. Verfahren nach Anspruch 1 oder 2, wobei das adaptive Filtern auf Wavelet-Transformation beruht.

4. Verfahren nach Anspruch 3, wobei für die Wavelet- Transformation auf Level 3 eine Approximationskomponente verwendet wird.

5. Verfahren nach einem beliebigen der vorstehenden Ansprüche, wobei der zweite Filterkoeffizient dergestalt gesucht wird, dass der euklidische Abstand der Layer-3-gefilterten Messung und den adaptiv gefilterten Messungen minimal ist.

**6.** Das Verfahren nach einem jeglichem der vorgenannten Ansprüche, wobei das Verfahren weiterhin einen Aktualisierungsschritt für Handoverparameter unter Verwendung des zweiten Layer-3-Filterkoeffizienten umfasst, wobei besagte Handoverparameter die Parameter Time-to-Trigger (TTT) und Handover-Hysterese (HOM) umfassen.

**7.** Benutzergerät, konfiguriert für das Optimieren des Layer-3-Filterns von Handovermessungen, wobei besagtes Benutzergerät umfasst:

- Mittel für das Speichern Layer-3-gefilterter Messungen eines vordefinierten Satzes von Handovermessungen, wobei das Layer-3-Filtern einen ersten Layer-3-Filterkoeffizienten "K" verwendet;
- Mittel für das Ausführen eines adaptiven Filterns für besagten vordefinierten Satz von Handovermessungen, so dass adaptiv gefilterte Messungen gewonnen werden;
- Mittel für das Suchen und Abrufen eines zweiten Layer-3-Filterkoeffizienten, dergestalt, dass die Layer-3-gefilterten Messungen, die anhand des besagten zweiten Layer-3-Filterkoeffizienten gefiltert wurden, mit den adaptiv gefilterten Messungen übereinstimmen;
- Mittel für das Einrichten des Layer-3-Filters für das Layer-3-Filtern von Handovermessungen mit dem zweiten Layer-3-Filterkoeffizienten.

**8.** Computerprogramm, implementierbar in die Prozessoreinheit eines Computers, wobei besagtes Programm Programmbereiche für das Ausführen von Anweisungen umfasst, die den Schritten eines Verfahrens nach jeglichem der Ansprüche 1-6 entsprechen.

## Revendications

**1.** Procédé d'optimisation du filtrage de couche 3 des mesures du transfert sur un équipement d'utilisateur, ledit procédé comprenant les étapes suivantes :

- mémoriser les mesures ayant subi un filtrage de couche 3 d'un ensemble prédéfini de mesures de transfert, le filtrage de couche 3 employant un premier coefficient de filtrage de couche 3 « K » ;
- réaliser un filtrage adaptatif sur ledit ensemble prédéfini de mesures de transfert de manière à obtenir des mesures filtrées de manière adaptative ;
- chercher et obtenir un deuxième coefficient de filtrage de couche 3 de sorte que les mesures ayant subi un filtrage de couche 3 qui sont filtrées avec ledit deuxième coefficient de filtrage de couche 3 s'accordent avec les mesures filtrées de manière adaptative ;
- utiliser ledit deuxième coefficient de filtrage de couche 3 pour le filtrage de couche 3 des mesures de transfert.

**2.** Procédé selon la revendication 1, selon lequel le filtrage de couche 3 et le filtrage adaptatif d'un ensemble prédéfini de mesures de transfert sont réalisés simultanément.

**3.** Procédé selon la revendication 1 ou 2, selon lequel le filtrage adaptatif est basé sur une transformée en ondelette.

**4.** Procédé selon la revendication 3, selon lequel une composante d'approximation au niveau 3 est utilisée pour la transformée en ondelette.

**5.** Procédé selon l'une quelconque des revendications précédentes, selon lequel le deuxième coefficient de filtrage est recherché de telle sorte que la distance euclidienne entre la mesure ayant subi un filtrage de couche 3 et les mesures filtrées de manière adaptative soit minimale.

**6.** Procédé selon l'une quelconque des revendications précédentes, selon lequel il comprend en outre une étape consistant à mettre à jour les paramètres de transfert en utilisant le coefficient de filtrage de couche 3, lesdits paramètres de transfert incluant le temps avant déclenchement (TTT) et la marge d'hystérésis de transfert (HOM).

**7.** Équipement d'utilisateur configuré pour optimiser le filtrage de couche 3 des mesures de transfert, ledit équipement d'utilisateur comprenant

- des moyens pour mémoriser les mesures ayant subi un filtrage de couche 3 d'un ensemble prédéfini de mesures de transfert, le filtrage de couche 3 employant un premier coefficient de filtrage de couche 3 « K » ;
- des moyens pour réaliser un filtrage adaptatif sur ledit ensemble prédéfini de mesures de transfert de manière à obtenir des mesures filtrées de manière adaptative ;
- des moyens pour chercher et obtenir un deuxième coefficient de filtrage de couche 3 de sorte que les mesures ayant subi un filtrage de couche 3 qui sont filtrées avec ledit deuxième coefficient de filtrage de couche 3 s'accordent avec les mesures filtrées de manière adaptative ;
- des moyens pour paramétrer le filtre de couche 3 pour le filtrage de couche 3 des mesures de transfert avec le deuxième coefficient de filtrage de couche 3.

8. Programme informatique pouvant être mis en oeuvre sur une unité de traitement d'un ordinateur, ledit programme comprenant des sections de code pour exécuter des instructions correspondant aux étapes d'un procédé selon l'une quelconque des revendications 1 à 6.

A           B

| Layer 1 Filtering | → | Layer 3 Filtering | → | HO Evaluation Criteria | → Event triggered reporting |

Filter Parameters

HO Parameters

## FIG.1

## FIG.2

Filtered RSRP [dB]

Serving Sector

HOM(dB)

Any Sector (Future Target)

TTT (ms)    P(ms)

Time

Start Of TTT

HO Decision    HO Command

K

Layer 1 measurements $\{S_i\}_{i=1}^{N}$

Conventional layer 3 filtering

$\{F_i\}_{i=1}^{N}$

Dynamic and adaptive filtering method

$\{R_i\}_{i=1}^{N}$

Optimization phase

## FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2413625 A1

**Non-patent literature cited in the description**

• **D. AZIZ et al.** Improvement of LTE handover performance through interference coordination. IEEE, 2009
• EUTRA Radio Resource Control. *3GPP TS 36.331 V8.2.0,* June 2008
• **M. ANAS et al.** Performance analysis of handover measurements and layer 3 filtering for UTRAN LTE. *IEEE PIMRC'07*
• Wavelet Based detection of shadow fading in wireless networks'', Global Telecommunications Conference. **X. LONG ; B. SIKDAR.** GLOBECOM '07. IEEE, 2007